(19) Europäisches Patentamt

European Patent Office

Office européen des brevets

(11) **EP 1 141 654 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.$^7$: **G01B 7/06**

(21) Anmeldenummer: **99957961.8**

(22) Anmeldetag: **06.11.1999**

(86) Internationale Anmeldenummer:
**PCT/DE1999/003558**

(87) Internationale Veröffentlichungsnummer:
**WO 2000/037881 (29.06.2000 Gazette 2000/26)**

(54) **BETREIBEN EINES WIRBELSTROMSENSORS**

OPERATING AN EDDY CURRENT SENSOR

FAIRE FONCTIONNER UN CAPTEUR A COURANTS DE FOUCAULT

(84) Benannte Vertragsstaaten:
**DE FR GB**

(30) Priorität: **18.12.1998 DE 19858754**
**26.02.1999 DE 19908360**

(43) Veröffentlichungstag der Anmeldung:
**10.10.2001 Patentblatt 2001/41**

(73) Patentinhaber: **Micro-Epsilon Messtechnik GmbH & Co. KG**
**94496 Ortenburg (DE)**

(72) Erfinder:
- **MANDL, Roland**
  **D-94496 Ortenburg (DE)**
- **MEDNIKOV, Felix**
  **D-94496 Ortenburg (DE)**

(74) Vertreter: **Naumann, Ulrich, Dr.-Ing.**
**Patentanwälte,**
**Ullrich & Naumann,**
**Luisenstrasse 14**
**69115 Heidelberg (DE)**

(56) Entgegenhaltungen:
WO-A-97/23762          DE-A- 19 610 844
DE-A- 19 628 220          DE-A- 19 631 438
US-A- 4 303 885          US-A- 4 771 238

- **PATENT ABSTRACTS OF JAPAN vol. 013, no. 149 (P-855), 12. April 1989 (1989-04-12) & JP 63 311103 A (SUMITOMO METAL IND LTD), 19. Dezember 1988 (1988-12-19)**
- **PATENT ABSTRACTS OF JAPAN vol. 010, no. 274 (P-498), 18. September 1986 (1986-09-18) & JP 61 096401 A (KOBE STEEL LTD), 15. Mai 1986 (1986-05-15)**

**Beschreibung**

Die Erfindung betrifft Verfahren zum Betreiben eines Wirbelstromsensors mit einer Meßspule und einer Auswerteschaltung zur Bestimmung von Material- oder Geometrieparametern eines Meßobjekts, bei dem das Meßobjekt mit Abstand zu der Meßspule angeordnet wird, die Impedanz der Meßspule ausgewertet wird, während die Meßspule über eine Wechselspannung vorgegebener Frequenz gespeist ist, und bei dem die Auswerteschaltung aufgrund der Impedanz der Meßspule die Materialund Geometrieparameter des Meßobjekts bestimmt.

Wirbelstromsensoren werden häufig in der Industrie zur Abstandsmessung und zur Dickenmessung an einem flachen Meßobjekt, z.B. einer Bahn, einer Schicht oder einem Band, eingesetzt. Dabei werden sie meist bei schwierigen Umgebungsbedingungen, bspw. bei hohen Temperaturen, verwendet. Gerade im Zusammenhang mit hohen, stark schwankenden Temperaturen kommt es bei bekannten Verfahren zur Bestimmung von Material- und Geometrieparametern zu starken Verfälschungen der Meß- und Auswerteergebnisse. Bei der Meßspule des Wirbelstromsensors führt der Temperatureinfluß in erster Linie zu einer Änderung des Realteils, aber auch ein Einfluß auf den Imaginärteil der komplexen Impedanz ist feststellbar. Andererseits hat die Temperatur aber auch einen Einfluß auf die Leitfähigkeit des Meßobjekts. Da die Leitfähigkeit des Meßobjekts wiederum Einfluß auf die induzierten Wirbelströme und über die Rückwirkung der magnetischen Kopplung auch auf die Impedanz der Meßspule hat, ist auch die Leitfähigkeit des Meßobjekts eine Quelle für Verfälschungen des Meßergebnisses.

Aus der DE 196 31 438 A1 ist ein Wirbelstromsensor mit einer Meß- und einer Kompensationsspule bekannt, die in unmittelbarer Nähe, d.h. in thermischem Kontakt, zu der Meßspule angeordnet ist. Die elektromagnetischen Felder der Kompensationsspule und der Meßspule sind orthogonal zueinander orientiert. Durch die orthogonate Anordnung der Kompensationsspule hat das Meßobjekt einen geringen Einfluß auf deren Impedanz, falls der Wirbelstromsensor mit seiner Meßspule so positioniert wird, daß sich die Anwesenheit des Meßobjekts maximal auf die Impedanz der Meßspule auswirkt.

Ein Nachteil des bekannten Wirbelstromsensors besteht darin, daß die Temperatureinflüsse auf die Leitfähigkeit des Meßobjekts über den Wirbelstromeffekt in die Meßspule einkoppeln, so daß die Meßergebnisse, bspw. der Dicke einer Schicht, durch die Veränderung der Leitfähigkeit beeinflußt werden.

Ferner sind Wirbelstromsensoren bekannt, die bei einem Verfahren zur berührungslosen Foliendickenmessung eingesetzt werden, wobei der Wirbelstromsensor an einer Seite des Meßobjekts angeordnet ist. Dabei besteht der Nachteil, daß der Wirbelstromsensor abhängig von den Materialeigenschaften in einem bestimmten, nachzuregelnden Grundabstand zum Meßobjekt gehalten werden muß, um exakte Messungen durchzuführen.

Der Erfindung liegt daher die Aufgabe zugrunde, ein Verfahren und einen miniaturisierungsfähigen Wirbelstromsensor zur berührungslosen Messung von Material- und Geometrieparametem elektrisch leitender Materialien anzugeben, wobei eine zuverlässige Kompensation von Störgrößen auf die Meßergebnisse vorgesehen ist. Unter Störgröße wird die Impedanzschwankung der Meßspule durch Veränderung des Grundabstands oder der Temperatur verstanden, wodurch die Meßergebnisse verfälschend beeinflußt werden.

Diese Aufgabe wird erfindungsgemäß durch Verfahren nach dem Anspruchen 1 gelöst. Danach wird die Impedanz der Meßspule bei einer Wechselspannung mit einer ersten Frequenz erfaßt, die Impedanz der Meßspule bei einer Wechselspannung mit einer zweiten Frequenz erfaßt und die Auswerteschaltung errechnet aufgrund der Impedanzen der Meßspule bei der ersten und der zweiten Frequenz die Material- und Geometrieparameter des Meßobjekts.

Es ist erkannt worden, daß die Temperatureinflüsse auf die Messung der Material- und Geometrieparameter des Meßobjekts hervorragend kompensiert werden können, wenn die Messung mit einem Wirbelstromsensor bei zwei unterschiedlichen Frequenzen durchgeführt wird. Die Temperatureinflüsse wirken sich, abhängig von der Frequenz der Wechselspannung, mit der die Meßspule gespeist wird, unterschiedlich aus. Andererseits kann die Auswerteschaltung aufgrund der Impedanzen der Meßspule bei den unterschiedlichen Frequenzen, bei Kenntnis der mathematischen Zusammenhänge zwischen den temperaturbeeinflußten Größen, bspw. der Leitfähigkeit des Meßobjekts, die Material- und Geometrieparameter des Meßobjekts berechnen. Eine vollständige Kompensation der Temperatureinflüsse auf die Meßgrößen ist nur möglich, wenn sowohl der Temperatureinfluß auf die Impedanz der Meßspule als auch der Temperatureinfluß auf die Leitfähigkeit des Meßobjekts kompensiert werden.

Die Verfahren der vorliegenden Erfindung werden bevorzugt im Zusammenhang mit der einseitigen Foliendickenmessung eingesetzt, wobei der Wirbelstromsensor an einer Seite des Meßobjekts angeordnet ist. Bei dem Verfahren wird die Dicke bzw. Stärke eines flächigen Meßobjekts, insbesondere einer Bahn, eines Bandes oder einer Schicht aus elektrisch leitendem Material, mit Hilfe mindestens einer von einem Wechselstrom durchflossenen Meßspule, die mit einem Grundabstand zum Meßobjekt angeordnet ist, bestimmt. Dabei wird über die Impedanz die Änderung der Induktivität und Dämpfung ausgewertet. Hinsichtlich des Grundabstands kann zunächst eine Messung mit dem Wirbelstromsensor ohne Meßobjekt durchgeführt werden, um den Wirbelstromsensor zu kalibrieren. Danach können dann die Messungen mit dem Meßobjekt durchgeführt werden, wobei erfindungsgemäß die Impedanzschwankungen aufgrund der Veränderung des Grundabstands kompensiert werden sollen. Bei dem Verfahren gemäß der vorliegenden Erfindung ist eine Kalibrierung auch dann möglich, wenn Messungen nur mit dem Meßobjekt durchgeführt werden können. Ein Microcontroller kann dann aus den Meßergebnissen bei den verschiedenen Frequenzen den kompensierten Meßwert errechnen.

Das Verfahren kann folgende Meßschritte vorsehen: Ermittlung der Impedanz oder des Induktivitätswertes und/oder des Dämpfungswertes der Meßspule bei einer ersten Frequenz. Dabei ist entweder kein Meßobjekt im Bereich des Wirbelstromsensors vorgesehen oder der Abstand zwischen Meßobjekt und Meßspule ist größer als der doppelte Radius R der Meßspule, so daß der Einfluß des Meßobjekts klein ist. Anschließend wird der induktivitätswert und der Dämpfungswert mit vorhandenem Meßobjekt bestimmt, wobei der Abstand zwischen Meßspule und Meßobjekt kleiner als der Radius R der Meßspule ist. Die Meßergebnisse werden bevorzugt in einen dimensionslosen Wert umgewandelt. Schließlich wird über einen Rechner aus dem Meßwert der Meßspule die Dicke des Meßobjekts bestimmt. Dazu kann beispielsweise die Leitfähigkeit des Meßobjekts bei der Berechnung verwendet werden. Gerade bei der erfindungsgemäßen Durchführung der Messung bei zwei unterschiedlichen Frequenzen, ist jedoch die Ermittlung der Leitfähigkeit nicht unbedingt erforderlich. Denn der dem Wirbelstromsensor nachgeschaltete Rechner MC kann die Dicke des Meßobjekts durch einen Algorithmus berechnen, der von der Leitfähigkeit und/oder dem Grundabstand zwischen Meßspule und Meßobjekt unabhängig ist.

Bei einer Weiterbildung der Erfindung kann die Dicke D eines flächigen Meßobjekts aus dem Meßwert berechnet werden. Bei bekannter, bspw. zuvor gemessener Leitfähigkeit des Meßobjekts, läßt sich die Dicke aus folgenden Gleichungen bestimmen:

$$D \approx konst. * \tan \varphi_c = -\frac{\varphi_2(\xi,\beta)}{\varphi_1(\xi,\beta)} \qquad \xi = \frac{2d}{r} \qquad \beta = r\sqrt{\mu_o \omega \sigma}$$

$$\varphi_1(\xi,\beta) = \frac{3}{2}\left[\frac{3}{2}(ch(\xi m) - \cos(\xi n)) + m*sh(\xi m) + n*\sin(\xi n)\right]$$

$$\varphi_2(\xi,\beta) = mn(ch(\xi m) - \cos(\xi n)) + \frac{3}{2}(n*sh(\xi m) - m*\sin(\xi n))$$

$$m = \frac{1}{\sqrt{2}}\sqrt{\sqrt{\frac{81}{16} + \beta^4} + \frac{9}{4}} \qquad n = \frac{1}{\sqrt{2}}\sqrt{\sqrt{\frac{81}{16} + \beta^4} - \frac{9}{4}}$$

In den oben genannten Gleichungen sind D die Dicke des Meßobjekts, d der Abstand von der Spule zum Meßobjekt, r der Radius der Spule, $\omega$ die Kreisfrequenz und $\mu_o$ die magnetische Feldkonstante der Meßspule. Erfindungsgemäß kann die Auswerteschaltung die Dicke des Meßobjekts mittels den oben genannten Gleichungen aus den Impedanzen der Meßspule berechnen. Dabei muß die Leitfähigkeit $\sigma$ des Meßobjekts bekannt sein. Dieses Verfahren kann erfindungsgemäß bei einem Wirbelstromsensor mit oder ohne Kompensationsspule eingesetzt werden.

Bevorzugt kann die Leitfähigkeit des Meßobjekts durch die Auswerteschaltung aufgrund der gemessenen Impedanz der Meßspule bei einer ersten Frequenz berechnet werden. Der Vorteil bei diesem Verfahren besteht darin, daß die Leitfähigkeit des Meßobjekts nicht vor jedem Meßvorgang bestimmt sein muß, um die Dicke D des Meßobjekts zu berechnen. Die Auswerteschaltung kann aufgrund der oben angegebenen Gleichungen die Leitfähigkeit des Meßobjekts berechnen.

Bei einer bevorzugten Weiterbildung der Erfindung wird die Meßspule mit einer Wechselspannung hoher erster Frequenz versorgt, so daß die Impedanz der Meßspule bei dieser ersten Frequenz von den Material- oder Geometrieparametern des Objekts nahezu unabhängig ist. Wenn die erste Frequenz groß genug gewählt ist, ist die Impedanz der Meßspule von den Material- oder Geometrieparametern, insbesondere der Dicke des flächigen Meßobjekts unabhängig. Damit ist die Bestimmung der Material- oder Geometrieparameter des Meßobjekts besonders vorteilhaft ohne die temperaturabhängige Leitfähigkeit des Meßobjekts zu berechnen. Da dann die Bestimmung der Dicke des Meßobjekts unabhängig von der Leitfähigkeit des Meßobjekts ist, sind Temperatureinflüsse auf das Meßobjekt dadurch kompensiert.

In besonders vorteilhafter Weise kann dann zusätzlich noch ein Wirbelstromsensor mit Kompensationsspule zusammen mit dem Verfahren verwendet werden, wobei die Kompensationsspule die Temperatureinflüsse auf die Meßspule selbst reduzieren kann. So wird die Kompensationsspule derart angeordnet, daß sie unabhängig von den Material- oder Geometrieparametem des Meßobjekts ist. Die Impedanz der Kompensationsspule kann dann mit der Impedanz der Meßspule verglichen, abgeglichen oder verrechnet werden, so daß der temperaturabhängige Einfluß auf die Meßspule durch den besonders vorteilhaften Wirbelstromsensor dieser Erfindung zusätzlich kompensiert wird. Bei der Verwendung des Verfahrens zusammen mit dem erfindungsgemäßen Wirbelstromsensor sind dann sowohl die Temperatureinflüsse auf die Leitfähigkeit des Meßobjekts als auch die Temperatureinflüsse auf die Meßspule selbst kompensiert.

Die Material- und Geometrieparameter des Meßobjekts werden bei einer besonders vorteilhaften Weiterbildung der Erfindung von der Auswerteschaltung, insbesondere durch einen Rechner, mittels eines nichtlinearen Gleichungssystems berechnet. Zur Berechnung der Dicke eines Meßobjekts lautet das Gleichungssystem wie folgt:

$$\tan \varphi_c, (\omega_k) = -\frac{\varphi_2(\xi, \beta_k)}{\varphi_1(\xi, \beta_k)}$$

Wird die Gleichung einerseits für die erste Frequenz (k = 1) mit der Gleichung für die zweite Frequenz (k = 2) gleichgesetzt, so läßt sich daraus besonders vorteilhaft die Leitfähigkeit des Meßobjekts berechnen. Die Größe $\omega_k$ ist dabei die Kreisfrequenz der Wechselspannung, mit der die Meßspule versorgt wird. Das nichtlineare Gleichungssystem ist bevorzugt von der ersten Frequenz und der zweiten Frequenz der Wechselspannung abhängig. Da sich aus dem Gleichungssystem die Leitfähigkeit berechnen läßt, können Material- oder Geometrieparameter des Meßobjekts, insbesondere die Dicke eines flachen Meßgutes, dadurch berechnet werden.

Bei einer besonders vorteilhaften Weiterbildung des erfindungsgemäßen Verfahrens, läßt sich die Dicke eines Meßobjekts in einem eingeschränkten Bereich näherungsweise bestimmen. In diesem Meßbereich läßt sich die Dicke D eines flachen Meßobjekts über folgende Gleichung berechnen:

$$D \approx konst.* \tan \varphi_c = -2\beta_k \frac{2\sqrt{2}\beta_k(ch(\delta_k)-cos(\delta_k))+3(sh(\delta_k)-sin(\delta_k))}{3\sqrt{2}(3ch(\delta_k)-2cos(\delta_k))+2\beta_k(sh(\delta_k)+sin(\delta_k))}, \ \delta_k = \frac{\xi\beta_k}{\sqrt{2}}$$

Bevorzugt ist die näherungsweise Berechnung der Material- oder Geometrieparameter des Meßobjekts durch die Auswerteschaltung auf einen Bereich abhängig von der Leitfähigkeit des Meßobjekts und den Frequenzen beschränkt. Der Bereich auf den die Berechnung der Auswerteschaltung beschränkt wird, läßt sich durch folgende Gleichung wiedergeben:

$$r = \sqrt{\omega_k \mu_0 \sigma_k} \geq 10$$

Bei einer besonders vorteilhaften Weiterbildung der Erfindung werden die Temperatureinflüsse auf die Impedanz der Meßspule durch eine Kompensationsspule ausgeglichen, deren Impedanz von Material- und Geometrieparametern des Meßobjekts nahezu unabhängig sind. Die Impedanz der Kompensationsspule kann dann zur Kompensation der Temperatureinflüsse bei der Impedanz der Meßspule verwendet werden. Dazu kann die Auswerteschaltung bspw. Mittel zum Berechnen des bereinigten Realteils der Meßspule aufweisen. Der bereinigte Realteil ergibt sich aus der Differenz zwischen den Realteilen der Impedanzen der Meßspule und der Kompensationsspule.

Die Auswerteschaltung kann zusätzlich Mittel zum Erfassen des bereinigten Imaginärteils als Differenz zwischen dem Imaginärteil der Impedanzen der Meßspule und der Kompensationsspule aufweisen. Auf diese Weise kann die Auswerteschaltung den Temperatureinfluß auf die Meßspule aufgrund der Subtraktion der Impedanz der Kompensationsspule kompensieren. Andererseits könnte der Temperatureinfluß aber auch dadurch kompensiert werden, daß sich der Temperatureinfluß bei der ersten Frequenz anders auswirkt als bei der zweiten Frequenz. Infolgedessen könnte auch der Temperatureinfluß über die impedanzen bei der ersten und der zweiten Frequenz der Versorgungs-Wechselspannung kompensiert werden.

Bei einer anderen Weiterbildung der vorliegenden Erfindung ist jeweils die Güte der Meßspule und der Kompensationsspule im Betrag angeglichen. Die Gleichung für die Güte der Spulen lautet:

$$Q = \frac{wL}{R}$$

Bei einer bevorzugten Weiterbildung der Erfindung ist die Güte der Meßspule gleich der Güte der Kompensationsspule.

Die Angleichung der Güte der Spulen kann durch entsprechende Wahl der Spulenparameter erreicht werden. Die Spulengüte kann bspw. über die Windungszahl, über den Durchmesser des Spulendrahtes oder über die Spulengeometrie eingestellt werden.

Bei einer besonders bevorzugten Weiterbildung der Erfindung ist die Berechnung der Material- und Geometrieparameter des Meßobjekts, insbesondere der Dicke, unabhängig vom Abstand zwischen der Meßspule und dem Meßobjekt. Dadurch kann die Auswerteschaltung die Dicke des Meßobjekts berechnen, ohne daß der Abstand zwischen Meßobjekt und Meßspule bekannt sein muß.

Bevorzugt erfolgt die Temperaturkompensation durch Subtraktion der komplexen Impedanz der Meßspule von der komplexen Impedanz der Kompensationsspule. Dazu können zwei Operationsverstärker mit jeweils der Meßspule bzw. der Kompensationsspule in der Rückkopplungsschleife vorgesehen sein.

Bei einer anderen Weiterbildung der Erfindung kann die Amplitude der Kopplungsimpedanz der Meßspule oder der Kompensationsspule zur numerischen Korrektur bzw. Verbesserung der Berechnung eingesetzt werden.

Die Aufgabe der vorliegenden Erfindung wird auch durch eine Vorrichtung gemäß Anspruch 18 gelöst. Danach ist ein Wirbelstromsensor mit einer Meßspule, einer Kompensationsspule und einer Auswerteschaltung zur Bestimmung von Materialund/oder Geometrieparametem eines elektrisch leitenden Meßobjekts vorgesehen, wobei die Meßspule und die Kompensationsspule mit Wechselstrom beaufschlagbar sind und die Kompensationsspule in der Nähe der Meßspule angeordnet ist, so daß sie den thermischen Umgebungsbedingungen der Meßspule ausgesetzt ist. Die Kompensationsspule ist erfindungsgemäß so ausgebildet und angeordnet, daß der Einfluß des Meßobjekts auf deren Impedanz möglichst gering ist.

Erfindungsgemäß ist erkannt worden, daß bei einem Wirbelstromsensor mit einer Kompensationsspule der Einfluß des Meßobjekts auf deren Impedanz sehr gering sein muß, so daß die Auswerteschaltung die temperaturabhängige Impedanz der Kompensationsspule von der temperatur- und vom Meßobjekt abhängigen Impedanz der Meßspule abziehen kann und der so verbleibende Differenzbetrag im Wesentlichen nur von dem Einfluß durch das Meßobjekt abhängt. Die Kompensationsspule kann beispielsweise so angeordnet sein, daß das Spulenfeld mit einem Winkel zu dem Spulenfeld der Meßspule ausgerichtet ist, so daß eine sich unterscheidende Rückkopplung des Meßobjekts auf die Kompensationsspule, im Vergleich zur Meßspule, ergibt.

Aber auch wenn die Achsen der Meßspule und der Kompensationsspule im wesentlichen parallel angeordnet sind, kann die Auswerteschaltung den Temperatureinfluß kompensieren. Beispielsweise besitzt dann die Kompensationsspule einen viel geringeren Querschnitt als die Meßspule, wodurch der Einfluß des Meßobjekts auf die Kompensationsspule stark verringert ist, wobei sich der Temperatureinfluß auf beide Spule ähnlich auswirkt. Infolgedessen kann die Impedanz der Kompensationsspule von der Impedanz der Meßspule zur Temperaturkompensation subtrahiert werden, so daß der Differenzwert nur vom Einfluß des Meßobjekts abhängt. Natürlich kann auch über die Anzahl der Spulenwindungen, der Spulengeometrie oder der Spulengüte eine unterschiedlich vom Meßobjekt abhängige Impedanz erzeugt werden.

Bei einer besonders vorteilhaften Weiterbildung der Erfindung ist die Kompensationsspule innerhalb der Meßspule angeordnet. Dadurch eignet sich der Wirbelstromsensor insbesondere für eine kompakte Bauweise, wobei der Radius der Kompensationsspule insbesondere kleiner gewählt ist, als der Radius der Meßspule. Durch die unterschiedliche Dimensionierung der Spulen kann der Einfluß des Meßobjekts auf die Kompensationsspule geringer gehalten werden, als der Einfluß auf die Meßspule. Auf diese Weise läßt sich durch Subtraktion der Impedanz der Kompensationsspule von der Impedanz der Meßspule eine vorteilhafte Temperaturkompensation durchführen.

Bevorzugt ist der Radius der Kompensationsspule kleiner als der Radius der Meßspule und insbesondere kleiner als der Abstand zwischen Kompensationsspule und Meßobjekt. Bei dieser geometrischen Ausgestaltung und Anordnung der Kompensationsspule ist der Einfluß des Meßobjekts auf die Impedanz der Kompensationsspule verhältnismäßig klein. Infolgedessen kann die Auswerteschaltung besonders vorteilhaft die Berechnung zur Temperaturkompensation durchführen.

Die Kompensationsspule und/oder die Meßspule des erfindungsgemäßen Wirbelstromsensors können auch als flache Spulen ausgebildet sein. Als flache Spule wird im Zusammenhang mit der Erfindung eine Spiralspute oder eine Spule verstanden, deren Windungen im wesentlichen in einer Ebene liegen, die aber auch senkrecht zur Ebene mehrlagig sein können. Dadurch können sowohl die Meßspule als auch die Kompensationsspule auf einer oder mehreren Leiterplatten oder ähnlichen Trägermaterialien, bspw. aus Kunststoff, angeordnet sein.

Bei einer besonders vorteilhaften Weiterbildung der Erfindung sind die Meßspule und die Kompensationsspule in einer Ebene zueinander, insbesondere auf demselben Träger angeordnet. Bevorzugt ist dann die Kompensationsspule konzentrisch zur Meßspule angeordnet. Auf diese Weise können die Meßspule und die Kompensationsspule auf einem Träger oder einer Leiterplatte angeordnet werden und besonders vorteilhaft miniaturisiert werden. Der Wirbelstromsensor kann dabei besonders bevorzugt auf einer Leiterplatte zusammen mit Halbleitern, Operationsverstärkern und anderen Bauelementen integriert werden.

Bei einer anderen vorteilhaften Weiterbildung des erfindungsgemäßen Wirbelstromsensors kann eine Meßspule und/oder eine Kompensationsspule auf einer Seite des Meßobjekts angeordnet sein, während eine andere Meßspule und/oder eine andere Kompensationsspule auf dessen gegenüberliegenden Seite angeordnet ist. Im einfachsten Fall ist an einer Seite des Meßobjekts die Meßspule als Sendespule vorgesehen, während auf der gegenüberliegenden Seite des Meßobjekts die Kompensationsspule als Empfangsspule ausgebildet ist. Natürlich kann die Empfangsspule auch eine weitere Meßspule zur Bestimmung der Material- oder Geometrieparameter des Meßobjekts sein.

Bevorzugt ist die Meßspule und/oder die Kompensationsspule als Spiralspule in planarer Technik ausgebildet. Dazu kann die Meßspule und/oder die Kompensationsspule in Dünnschicht- oder Dickschichttechnik auf einem Trägermaterial, bspw. einem Leiterplattenmaterial, aufgebracht sein. Bei einer Weiterentwicklung könnte dann auch die Auswerteschaltung auf dem Trägermaterial der Meßspule und/oder der Kompensationsspule mit integriert sein. Dadurch entsteht ein besonders vorteilhafter und kompakter Wirbelstromsensor mit Temperaturkompensation.

Die Meßspule oder die Kompensationsspule könnten auch mehrlagig ausgebildet sein. Ebenso könnte die Meßspule von der Kompensationsspule durch eine Isolationsschicht getrennt sein, so daß die ebenen Spulen in zwei Lagen nebeneinander angeordnet sind.

Bei einer besonders bevorzugten Weiterbildung der Erfindung ist die Güte der Meßspule auf die Güte der Kompensationsspule abgestimmt. Bevorzugt ist die Güte der Meßspule im Betrag gleich mit der Güte der Kompensationsspule. Die Güte der Spulen kann über die Anzahl der Windungen, den Durchmesser des Spulendrahtes oder die Spulengeometrie aufeinander abgestimmt werden.

Die Messung mit dem Wirbelstromsensor erfolgt bevorzugt berührungslos. Der Wirbelstromsensor wird insbesondere zur Messung der Dicke einer Schicht, einer Leiterbahn oder eines leitfähigen Bandes verwendet. Natürlich könnte der Wirbelstromsensor aber auch bei der Messung auf der Oberfläche des Objekts aufliegen. Die Oberfläche müßte dann aber als Isolator ausgebildet sein.

Bei einer Weiterbildung des Wirbelstromsensors sind die Meßspule und die Kompensationsspule jeweils in die Rückkopplungsschleife eines Operationsverstärkers der Auswerteschaltung geschaltet. Dadurch läßt sich die Temperaturkompensation besonders vorteilhaft durchführen, wenn bspw. die Ausgänge der Operationsverstärker zusammengeschaltet sind und die Eingänge der Operationsverstärker mit einem Oszillator verbunden sind, der zwei komplementäre sinusförmige Wechselspannungen U1 und U2 erzeugt. Die komplementären sinusförmigen Wechselspannungen können dann zu den nicht invertierenden Eingängen des Verstärkers geführt sein. Aufgrund der Beschaltung mit den komplementären Wechselspannungen werden die Impedanzen der Meß- und der Kompensationsspule am ausgangsseitigen Knotenpunkt zwischen den Operationsverstärkern automatisch subtrahiert, so daß die Auswerteschaltung ein temperaturkompensiertes Ausgangssignal erzeugt.

Die Auswerteschaltung kann Mittel zum Erfassen der Meßspulenimpedanz, der Kompensationsspulenimpedanz und/oder der Kopplungsimpedanz aufweisen. Bspw. kann ein Spannungssignal, das zur Kopplungsimpedanz der Meßspule proportional ist, gemessen und verarbeiten werden, was den Vorteil hat, daß die Kopplungsimpedanz der Meßspule unabhängig vom Abstand und der elektrischen Leitfähigkeit des Meßgutes bei der erfindungsgemäßen Auswerteschaltung ist.

Außerdem kann die Auswerteschaltung eine Elektronik zum Feststellen der Veränderung des Phasenwinkels der Meßspulenimpedanz, der Kompensationsspulenimpedanz oder der Kopplungsimpedanz aufweisen. Der Phasenwinkel kann dann zur weiteren Auswertung durch den Rechner der Auswerteschaltung herangezogen werden.

Es gibt nun verschiedene Möglichkeiten, die Lehre der Erfindung in vorteilhafter Weise auszugestalten und weiterzubilden. Dazu wird einerseits auf die nachgeordneten Ansprüche, andererseits auf die nachfolgende Erläuterung mehrerer Ausführungsformen des erfindungsgemäßen Wirbelstromsensors bzw. mehrerer Ausführungsbeispiele für das erfindungsgemäße Verfahren anhand der Zeichnungen verweisen. Es zeigen, jeweils in schematischer Darstellung,

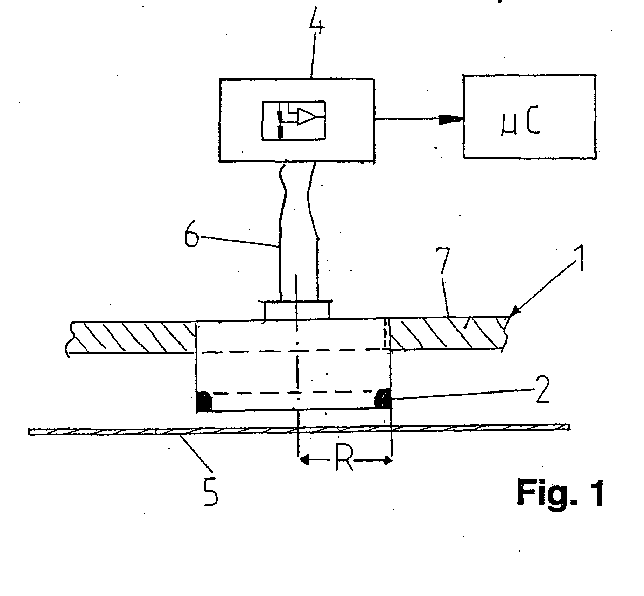

Fig. 1     eine Ansicht eines Meßaufbaus, mit dem die erfindungsgemäße Bestimmung der Dicke eines Meßobjekts mittels einer einseitig am Meßobjekt angeordneten Meßspule durchgeführt werden kann,

Fig. 2a     eine erste Ausführungsform des Wirbelstromsensors der vorliegenden Erfindung bei der Dickenmessung an einem flächigen Meßobjekt,

Fig. 2b     eine Draufsicht auf ein Trägermaterial mit einer Meßspule und einer Kompensationsspule des erfindungsgemäßen Wirbelstromsensors,

Fig. 3     einen Wirbelstromsensor gemäß der vorliegenden Erfindung mit zwei gegenüberliegenden Spulen, wobei eine Spule als Sendespule und eine weitere als Empfangsspule dient,

Fig. 4     eine Auswerteschaltung des Wirbelstromsensors zur Bestimmung eines temperaturkompensierten Meßwerts für Material- und Geometrieparameter elektrisch leitender Materialien,

Fig. 5     ein Schaubild mit einer Funktion, die den Zusammenhang zwischen tan $\varphi_c$ und der Dicke D des Meßobjekts wiedergibt und

Fig. 6     ein Schaubild mit Funktionen, die den Zusammenhang zwischen tan $\varphi_c$ und der Dicke D des Meßobjekts zeigen, wobei die einzelnen Kurven die Meßergebnisse bei unterschiedlichem Abstand zwischen dem Meßobjekt und der Meßspule wiedergeben.

Der Wirbelstromsensor 1 weist eine Meßspule 2, gegebenenfalls eine Kompensationsspule 3 und eine Auswerteschaltung 4 auf. Die Auswerteschaltung 4 ist vorgesehen, um aufgrund der Impedanz der Meßspule 2 Material- und/oder Geometrieparameter, bspw. die Dicke, eines elektrisch leitenden Meßobjekts 5 zu bestimmen. Die Auswerteschaltung 4 weist zur Berechnung der Material- und/oder Geometrieparameter einen Mikrorechner µC auf. Die Meßspule 2 und die Kompensationsspule 3 sind mit Wechselstrom beaufschlagbar und die Kompensationsspule 3 ist in der Nähe der Meßspule 2 angeordnet, so daß sie den thermischen Umgebungsbedingungen der Meßspule 2 ausgesetzt ist.

Der Wirbelstromsensor 1 ist zur berührungslosen Messung am flachen Meßobjekt 5, insbesondere einer Bahn, eines Bandes oder einer Schicht, mit einem Abstand d zur Oberfläche des Meßobjekts 5 angeordnet. Das Meßobjekt 5 wird am Wirbelstromsensor 1 vorbei geführt. Dazu kann der Wirbelstromsensor im Bereich einer Produktionsanlage für flächige Materialien befestigt sein.

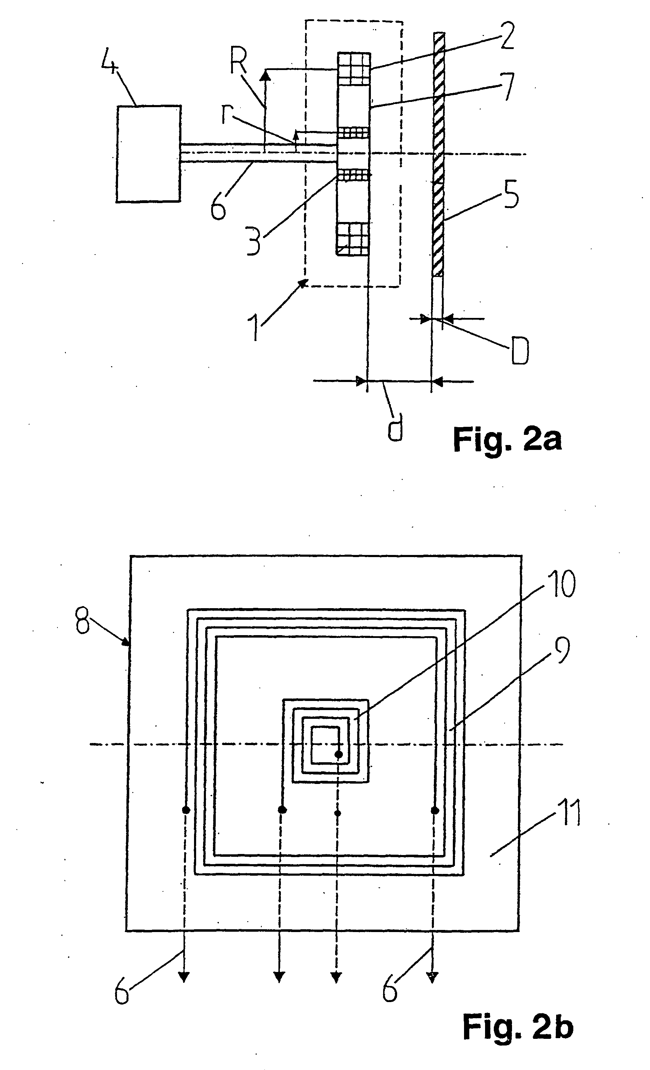

Wie in Fig. 2a dargestellt, ist die Meßspule 2 des Wirbelstromsensors 1 als flache Spule ausgebildet, die im wesentlichen in einer Ebene liegt und nur wenige, senkrecht zur Ebene nebeneinander liegende Spulenwindungen aufweist. Der Radius R der Meßspule ist wesentlich größer als die Ausdehnung der Spule senkrecht zur Ebene. Die Kompensationsspule 3 ist konzentrisch oder koaxial innerhalb der Meßspule 2 angeordnet und weist einen kleineren Radius r auf. Die Meßspule 2 und die Kompensationsspule 3 sind auf einem Träger 7 angeordnet und liegen in einer Ebene. Auch die Kompensationsspule 3 ist als flache Spule ausgebildet.

Sowohl die Meßspule 2 als auch die Kompensationsspule 3 werden über eine Leitung 6 mit Wechselspannung versorgt. Die Meßspule 2 kann mit einer sinusförmigen Wechselspannung und die Kompensationsspule 3 kann mit einer dazu komplementären sinusförmigen Wechselspannung versorgt sein. Die Güte der Meßspule 2 sollte unter ähnlichen Umgebungsbedingungen der Güte der Kompensationsspule 3 entsprechen. Die Angleichung der Spulengüten kann durch entsprechende Wahl der Spulenparameter erreicht werden, bspw. kann die Spulengüte über die Windungszahl, den Durchmesser des Spulendrahtes und die Spulengeometrie beeinflußt werden. Der Radius r der Kompensationsspule ist bevorzugt kleiner als der Abstand d zwischen dem Meßobjekt 5 und der Meßspule 2.

Der Wirbelstromsensor 1 funktioniert folgendermaßen: Die mit der sinusförmigen Wechselspannung versorgte Meßspule 2, insbesondere deren Impedanz, wird durch die Anwesenheit des Meßobjekts 5 beeinflußt. Der Wirbelstromeffekt führt zu einer Veränderung des komplexen Anteils der Impedanz. Aufgrund der Veränderung der Impedanz der Meßspule 2, ermittelt die Auswerteschaltung 4 die Dicke D eines flächigen Meßobjekts 5.

In Abhängigkeit von der Umgebungstemperatur wird einerseits die Impedanz der Meßspule 2 und andererseits die Leitfähigkeit des Meßobjekts 5 beeinflußt. Bei bekannter Leitfähigkeit des Meßobjekts 5, kann die temperaturabhängige Impedanzänderung der Meßspule 2 dadurch ausgeglichen werden, daß die Impedanzänderung der Kompensationsspule 3 zum Ausgleich des Temperatureinflusses herangezogen wird. Bspw. kann die Impedanz der Kompensationsspule 3 von der Impedanz der Meßspule 2 durch die Auswerteschaltung 4 subtrahiert werden. Die Kompensationsspule 3 muß dazu in möglichst geringem Umfange durch das vorhandene Meßobjekt 5 beeinflußt werden, so daß sich lediglich der Einfluß der Temperaturänderung auf die Impedanz der Kompensationsspule 3 auswirkt. Der Einfluß des Meßobjekts 5 auf die Impedanz kann bspw. dadurch gering gehalten werden, daß der Radius r der Kompensationsspule 3 möglichst klein ist. Die Auswerteschaltung 4 kann dann aufgrund der unterschiedlichen Impedanzen bzw. Impedanzänderungen der Meßspule 2 und der Kompensationsspule 3 den temperaturkompensierten Wert für die Dicke D des Meßobjekts 5 berechnen.

Bei Versorgung der Meßspule 2 und wahlweise der Kompensationsspule 3 mit einer Wechselspannung erster Frequenz bei einer ersten Messung und mit einer Wechselspannung einer zweiten Frequenz bei einer zweiten Messung kann über die Auswerteschaltung 4 die Dicke D aus einem nichtlinearen Gleichungssystem berechnet werden, wobei die Gleichung dann unabhängig von der Leitfähigkeit des Meßobjekts 5 und damit von der Temperaturbeeinflussung der Leitfähigkeit des Meßobjekts 5 ist.

In Fig. 2b ist ein Wirbelstromsensor 8 nach einer zweiten Ausführungsform dargestellt, wobei die Meßspule 9 und die Kompensationsspule 10 in Dünnschichttechnik auf einem Trägermaterial 11 aufgebracht sind. Das Trägermaterial 11 kann eine dünne Leiterplatte, ein Kunststoff-, Keramik- oder magnetisches Material sein, wobei die Meßspule 9 und die Kompensationsspule 10 einlagig darauf aufgebracht sind. Die Kompensationsspule 10 ist innerhalb der Meßspule 9 und konzentrisch dazu angeordnet und beide Spulen 9, 10 sind als spiralförmige Spulen ausgebildet. Alternativ dazu können die Spulen auch mehrschichtig, jeweils durch eine Isolierschicht getrennt, aufgebaut sein. Die Abmessungen der Kompensationsspule 10 sind klein gegenüber dem Abstand d zwischen dem Meßobjekt 5 und dem Wirbelstromsensor 8. Dadurch wird der elektromagnetische Einfluß des Meßobjekts 5 auf die Kompensationsspule 10 verringert.

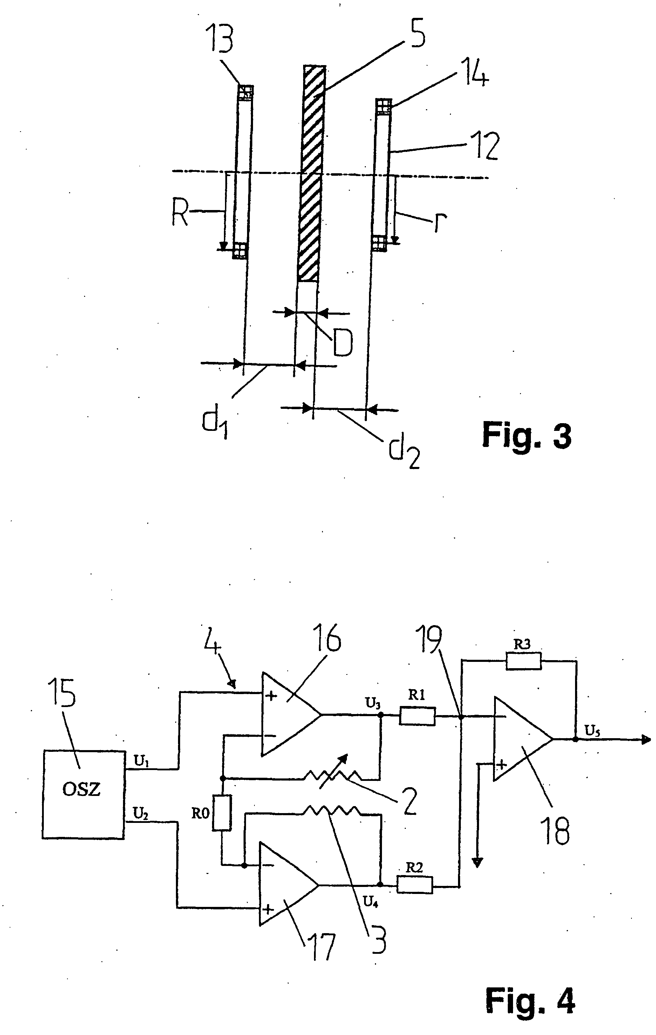

In Fig. 3 ist ein Wirbelstromsensor 12 mit einer Meßspule 13 und einer Kompensationsspule 14 vorgesehen. Die Meßspule 13 ist mit einem Abstand $d_1$ vom Meßobjekt 5 angeordnet, während die gegenüberliegende Kompensationsspule 14 mit einem Abstand $d_2$ zum Meßobjekt 5 angeordnet ist. Die Meßspule 13 dient dabei als Sendeund die Kompensationsspule 14 dient dabei als Empfangsspule. Der Radius r der Kompensationsspule 14 ist kleiner als der Radius R der Meßspule 13.

Alternativ zu dieser Ausführungsform könnten statt der Anordnung einer Meßspule 13 und einer Kompensationsspule 14 beiderseits des Meßobjekts 5 auch je eine Meßspule zu beiden Seiten des Meßobjekts 5 vorgesehen sein. Eine Temperaturkompensation der Impedanz der Meßspule 13 durch eine Kompensationsspule würde dann entfallen, so daß lediglich eine Temperaturkompensation über die Auswerteschaltung bezüglich der Leitfähigkeit des Meßobjekts 5 vorgesehen wäre.

In Fig. 4 ist die Auswerteschaltung 4 der Wirbelstromsensoren 1, 8 bzw. 12 dargestellt. Die Auswerteschaltung 4 weist einen Oszillator 15 und mehrere Operationsverstärker 16 bis 18 auf. Zur Beschattung der Operationsverstärker 16 bis 18 sind noch Widerstände R0, R1, R2 und R3 vorgesehen.

Der Oszillator 15 erzeugt zwei komplementäre, sinusförmige Wechselspannungen U, und $U_2$, die zu den nicht invertierenden Eingängen der Operationsverstärker 16 und 17 geführt sind. Die Meßspule 2 und die Kompensationsspule 3 sind jeweils in die Rückkopplung der Operationsverstärker 16, 17 geschaltet. Die Operationsverstärker 16, 17 dienen dabei als Meßverstärker zum Erfassen der Impedanzen der Meßspule 2 und der Kompensationsspule 3. Am Knotenpunkt 19 stellt sich ein Potential ein, das von der Impedanz der Meßspule 2 und der Impedanz der Kompensationsspule 3 abhängt und ein temperaturkompensiertes Meßsignal bildet. Das Meßsignal am Knotenpunkt 19 wird durch den Operationsverstärker 18 nochmals verstärkt, so daß das Ausgangssignal $U_5$ am Ausgang des Operationsverstärkers 18 vorliegt. Dieses Ausgangssignal $U_5$ wird einem Mikrokontroller der Auswerteschaltung zugeführt, wo eine weitere Berechnung durchgeführt wird. Diese Berechnung basiert bevorzugt auf dem gemäß der vorliegenden Erfindung offenbarten Verfahren, wobei eine zusätzliche Temperaturkompensation der Leitfähigkeit des Meßobjekts durch die Berechnung mit dem nichtlinearen Gleichungssystem erfolgt.

Das Ausgangssignal $U_3$ des als Meßverstärker beschalteten Operationsverstärkers 16 entspricht der Beziehung

$$\dot{U}_3 = \frac{U_1 K_1 \dot{Z}_2 - U_2 K_2 \dot{Z}_3}{R0}, \qquad \dot{Z}_2 = f(\mathit{Temp}), \dot{Z}_3 = f(\mathit{Temp}).$$

wobei K1 = R3/R1, K2 = R3/R2. $Z_2$ und $Z_3$ sind die komplexen Impedanzen der Meßspule 2 und der Kompensationsspule 3. Das Signal $U_3$ ist der Kopplungsimpedanz $dZ_2$ der Meßspule 2 proportional, weil $Z_3$ unabhängig vom Abstand und der elektrischen Leitfähigkeit des Meßobjekts 5 ist. Die Temperaturkompensation erfolgt durch einfaches Subtraktion der komplexen Impedanzen $Z_2$ und $Z_3$ der Meßspule 2 und der Kompensationsspule 3, ohne daß eine weiterreichende Berechnung erforderlich sein muß, da am Knotenpunkt 19 durch die Beschaltung der Auswerteschaltung 4 und die Versorgung mit zwei komplementären sinusförmigen Wechselspannungen U1 und U2, sich automatisch das Differenzspannungssignal einstellt.

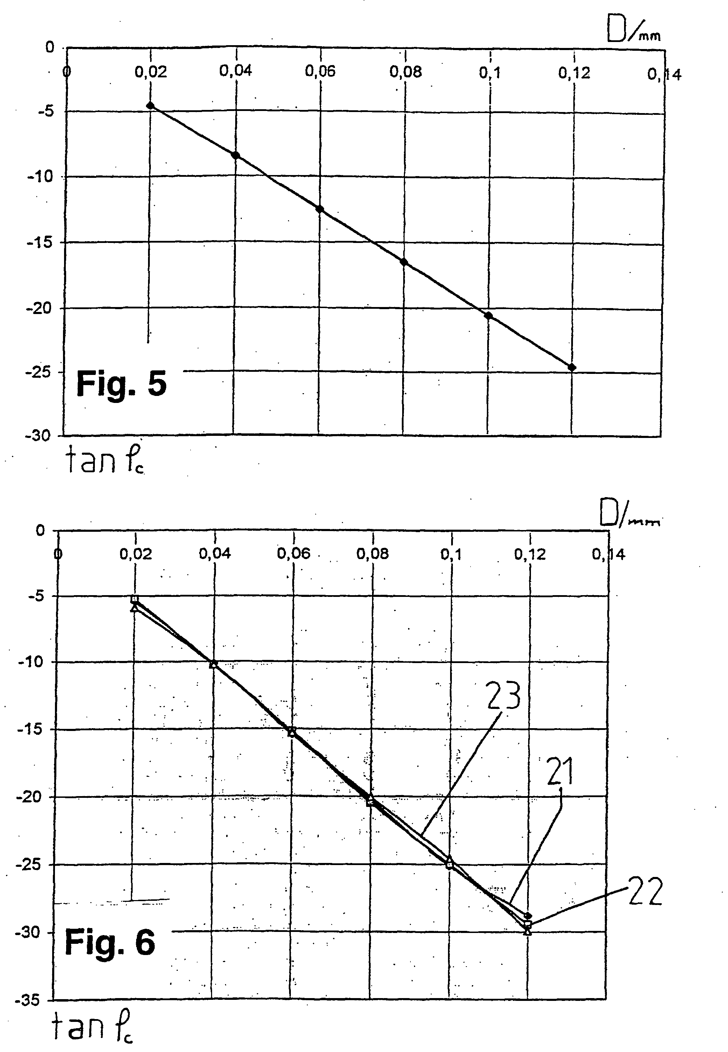

In Fig. 5 ist eine Meßkurve dargestellt, die den Zusammenhang zwischen tan $\varphi_c$ und der Dicke D des Meßobjekts 5 zeigt. Die Formel zur Berechnung des tan $\varphi_c$ ist im Zusammenhang mit dem erfindungsgemäßen Verfahren dargestellt worden und es sind im Schaubild die durch den Mikrokontroller der Auswerteschaltung 4 berechneten Werte für tan $\varphi_c$ aufgezeichnet, so daß daraus der proportionale Zusammenhang zwischen dem errechneten Wert tan $\varphi_c$ und der realen Dicke D des Meßobjekts 5 sichtbar ist.

Der tan $\varphi_c$, wie er am Ausgang des Mikrokontrollers der Auswerteschaltung 4 vorliegt, ergibt sich aus der Division des temperaturkompensierten Imaginärteils durch den temperaturkompensierten Realteil der Spulenimpedanzen. Die Berechnung des tan $\varphi_c$ läßt sich entsprechend der nichtlinearen Differentialgleichung aufgrund zweier Impedanzmeßwerte bei der ersten Frequenz und der zweiten Frequenz der Versorgungswechselspannung der Meßspule 2 und der Kompensationsspule 3, unabhängig von der Leitfähigkeit des Meßobjekts, errechnen.

In Fig. 6 ist nochmals der Zusammenhang zwischen tan $\varphi_c$ und der Dicke D des Meßobjekts 5 dargestellt, wobei als Parameter der Abstand zwischen dem Meßobjekt 5 und der Meßspule 2 aufgezeigt ist. Die in Fig. 6 aufgetragene Funktionen 21, 22, 23 zeigen, daß die Bestimmung von D nach der nichtlinearen Differentialgleichung nahezu unabhängig vom Abstand d des Meßobjekts 5 von der Meßspule 2 ist. Dadurch erübrigt sich die aufwendige exakte Ausrichtung des Meßobjekts 5 auf einen bestimmten Abstand d gegenüber der Meßspule 2 des Wirbelstromsensors 1.

Das Verfahren entsprechend der vorliegenden Erfindung führt zu hervorragenden Meßergebnissen bei dem Wirbelstromverfahren, da durch die Messung bei zwei unterschiedlichen Frequenzen des Wechselstroms, mit denen die Meßspule 2 und die Kompensationsspule 3 versorgt werden, die Ausgangssignale der Auswerteschaltung 4 von der temperaturabhängigen Leitfähigkeit des Meßobjekts 5 unabhängig sind. Durch den Wirbelstromsensor der vorliegenden Erfindung wird zusätzlich der Temperatureinfluß auf die Impedanz der Meßspule 2 kompensiert, so daß die Meßergebnisse schließlich von den Verfälschungen durch die Temperatur bereinigt sind.

In Bezug auf das erfindungsgemäße Verfahren werden im Folgenden noch die zur Berechnung der Auswer-

teschaltung 4 erforderlichen Formeln dargestellt:

Bei bekannter Leitfähigkeit $\sigma$ des Meßobjekts 5 kann die Dicke D des Meßobjekts 5 durch folgende Gleichungen bestimmt werden:

(Gleichung 1)

$$D \approx konst.*\tan \varphi_c = - \frac{\varphi_2(\xi,\beta)}{\varphi_1(\xi,\beta)} \qquad \xi = \frac{2d}{r} \qquad \beta = r\sqrt{\mu_o\omega\sigma}$$

$$\varphi_1 (\xi,\beta)=\frac{3}{2}[\frac{3}{2}(ch(\xi m)-\cos(\xi n))+m*sh(\xi m)+n*\sin(\xi n)]$$

$$\varphi_2 (\xi, \beta) = mn(ch(\xi m)-\cos(\xi n))+ \frac{3}{2} (n * sh (\xi m)-m * \sin (\xi n))$$

$$m = \frac{1}{\sqrt{2}} \sqrt{\sqrt{\frac{81}{16} + \beta^4} + \frac{9}{4}}, \qquad n = \frac{1}{\sqrt{2}} \sqrt{\sqrt{\frac{81}{16} + \beta^4} - \frac{9}{4}},$$

wobei d der Abstand zwischen der Meßspule 2 und dem Meßobjekt 5 ist, r der Radius der Meßspule 2 bzw. der Kompensationsspule 3 ist, $\mu_o$ die magnetische Feldkonstante und $\omega$ die Kreisfrequenz ist.

Ausgehend von oben angegebenen Gleichungen kann für eingeschränktes

$$\beta = r\sqrt{\omega\mu_o\sigma} \geq 10$$

der Wert für $\tan \varphi_c$ durch folgende vereinfachte Gleichung bestimmt werden:

(Gleichung 2)

$$\tan \varphi_c = -2\beta\frac{2\sqrt{2}\beta(ch(\delta)-\cos(\delta))+3(sh(\delta)-\sin(\delta))}{3\sqrt{2}(3ch(\delta)-2\cos(\delta))+ 2\beta_k(sh(\delta)+\sin(\delta))}, \delta = \frac{\xi\beta}{\sqrt{2}}$$

Für weiterhin eingeschränktes $\beta$ und $\xi\beta<1$ kann $\tan\varphi_c$ durch folgende Gleichung angenähert werden.

(Gleichung 3)

$$\tan \varphi_c = \frac{\beta^2\xi(2 + \xi)}{3(3\xi + 4 + \frac{3}{2}\xi 2)}$$

Bei dem im erfindungsgemäßen Verfahren verwendeten nichtlinearen Gleichungssystem wird $\tan \varphi_c$ bei einer ersten und einer zweiten Frequenz bestimmt und es ergibt sich $\tan\varphi_c$ rechnerisch aus dem nichtlinearen Gleichungssystem

(Gleichung 4)

$$\tan \varphi_c(\omega_k) = - \frac{\varphi_2(\xi,\beta_k)}{\varphi_1(\xi, \beta_k)}, \beta_k = r\sqrt{\mu_0\omega\sigma}, k = 1,2$$

Für eingeschränktes $\beta$ kann $\tan \varphi_c$ bestimmt werden als

(Gleichung 5)

$$D \approx konst.*\tan \varphi_c = -2\beta_k \frac{2\sqrt{2}\beta_k(ch(\delta_k)-\cos(\delta_k))+3(sh(\delta_k)-\sin(\delta_k))}{3\sqrt{2}(3ch(\delta_k) - 2\cos(\delta_k))+ 2\beta_k (sh(\delta_k) + \sin (\delta_k))}, \delta_k = \frac{\xi\beta_k}{\sqrt{2}}$$

Die Kreisfrequenz $\omega_1$ wird so groß gewählt, daß die Impedanz der Meßspule von der Dicke der Folie unabhängig wird. Damit kann die Leitfähigkeit berechnet werden.

$$\text{(Gleichung 6)}$$

$$\sigma = -\frac{9\tan\varphi(\omega_1)}{2\mu_o\omega_1 r^2}$$

Es wird von einer bekannten Leitfähigkeit ausgegangen, wobei $\omega = \omega_2$ gesetzt wird. Die Amplitude der Kopplungsimpedanz kann noch zur numerischen Korrektur und Verbesserung der Berechnung verwendet werden.

Bei bekannten $\sigma$ und $\mu_2$, $\tan\varphi_c$ kann die Messung bei einer Frequenz $\omega_1$ durchgeführt werden, so daß die Dicke D über Gleichung 1 gemessen werden kann. Es gilt dann:

$$\beta = 2\sqrt{\omega_1\mu_o\sigma}.$$

Bei unbekannten $\sigma$ oder $\mu_0$ muß wie beschrieben mit zwei Frequenzen $\omega_1$ und $\omega_2$ gemessen werden, damit die Dicke D bestimmt werden kann.

**Patentansprüche**

1. Verfahren zum Betreiben eines Wirbelstromsensors (1, 8, 12) mit einer Messspule (2, 9, 13) und einer Auswerteschaltung (4) zur Bestimmung von Material- oder Geometrieparametem, insbesondere der Dicke (D) eines Messobjekts (5), bei dem das Messobjekt (5) mit Abstand (d) zu der Messspule (2, 9, 13) angeordnet wird, die Impedanz der Messspule (2, 9, 13) ausgewertet wird, während die Messspule (2, 9, 13) über eine Wechselspannung vorgegebener Frequenz gespeist ist, und bei dem die Auswerteschaltung (4) aufgrund der Impedanz der Messspule (2, 9, 13) die Material- und Geometrieparameter des Messobjekts (5) bestimmt, wobei die Impedanz der Messspule (2, 9, 13) bei einer Wechselspannung mit einer ersten Frequenz erfasst wird, die -Impedanz- der Messspule (2, 9, 13) bei einer Wechselspannung mit einer zweiten Frequenz erfasst wird und wobei die Auswerteschaltung (4) aufgrund der Impedanzen der Messspule (2, 9, 13) bei der ersten und zweiten Frequenz die Material- und Geometrieparameter des Messobjekts (5) errechnet, wobei Temperatureinflüsse auf die Impedanz der Messspule (2, 9, 13) durch eine Kompensationsspule (3, 10, 14) ausgeglichen werden, deren Impedanz von Material- oder Geometrieparametem des Messobjekts (5) nahezu unabhängig ist, und wobei die Kompensationsspule (3, 10, 14) räumlich kleiner als die Messspute (2, 9, 13) ist, insbesondere innerhalb der Messspule (2, 9, 13) angeordnet ist.

2. Verfahren nach Anspruch 1, **dadurch gekennzeichnet, dass** bei bekannter, insbesondere gemessener Leitfähigkeit des Messobjekts (5), dessen Dicke (D) bestimmt wird oder dass die Leitfähigkeit des Messobjekts (5) durch die Auswerteschaltung (4) aufgrund der gemessenen Impedanz der Messspule (2, 9, 13) bei der ersten Frequenz berechnet wird.

3. Verfahren nach Anspruch 2, **dadurch gekennzeichnet, dass** die Messspule (2, 9, 13) mit einer Wechselspannung hoher erster Frequenz versorgt wird, so dass deren Impedanz von den Material- oder Geometrieparametern des Messobjekts (5) nahezu unabhängig ist.

4. Verfahren nach einem der Ansprüche 1 bis 3, **dadurch gekennzeichnet, dass** die Material- oder Geometrieparameter des Messobjekts (5) von der Auswerteschaltung (4), insbesondere durch einen Rechner, mittels eines nichtlinearen Gleichungssystems berechnet werden, wobei das nichtlineare Gleichungssystem von der ersten Frequenz und der zweiten Frequenz der Wechselspannung abhängig sein kann.

5. Verfahren nach einem der Ansprüche 1 bis 4, **dadurch gekennzeichnet, dass** mittels der berechneten Leitfähigkeit und des nichtlinearen Gleichungssystems die Material- oder Geometrieparameter des Messobjekts (5), insbesondere die Dicke (D) eines flachen Messgutes, berechnet wird.

6. Verfahren nach einem der Ansprüche 1 bis 5, **dadurch gekennzeichnet, dass** die Dicke (D) eines Messobjekts (5) über folgende Gleichung berechnet wird:

$$D \approx konst. * \tan \varphi_c = -2\beta_k \frac{2\sqrt{2}\beta_k(ch(\delta_k)\text{-}\cos(\delta_k))+3(sh(\delta_k)\text{-}\sin(\delta_k))}{3\sqrt{2}(3ch(\delta_k) - 2\cos(\delta_k))+ 2\beta_k (sh(\delta_k) + \sin (\delta_k))}$$

7. Verfahren nach einem der Ansprüche 1 bis 6, **dadurch gekennzeichnet, dass** die Berechnung der Material- oder Geometrieparameter des Messobjekts (5) durch die Auswerteschaltung (4) auf einen Bereich abhängig von der Leitfähigkeit des Messobjektes (5) und den Frequenzen beschränkt wird, wobei der Bereich, auf den die Berechnung der Auswerteschaltung (4) beschränkt wird, durch folgende Gleichung vorgegeben sein kann:

$$r\sqrt{\omega_k\mu_0\sigma_k} \geq 10$$

8. Verfahren nach einem der Ansprüche 1 bis 7, **dadurch gekennzeichnet, dass** die Auswerteschaltung (4) den Temperatureinfluss auf die Messspule (2, 9, 13) aufgrund der Impedanz der Messspule (2, 9, 13) rechnerisch kompensiert, wobei bei ähnlichen Umgebungsbedingungen die Güte der Messspule (2, 9, 13) und der Kompensationsspule (3, 10, 14) im Betrag gleich sein können.

9. Verfahren nach einem der Ansprüche 1 bis 8, **dadurch gekennzeichnet, dass** die Berechnung der Material- und Geometrieparameter des Messobjektes (5) unabhängig vom Abstand zwischen der Messspule (2, 9, 13) und dem Messobjekt (5) berechnet wird und/oder dass die Temperaturkompensation durch Subtraktion der komplexen Impedanz der Messspute (2, 9, 13) von der komplexen Impedanz der Kompensationsspule (3, 10, 14) erfolgt und/oder dass die Materialoder Geometrieparameter des Messobjkts (5) durch eine Sende- und eine Empfangsspule gemessen werden und/oder Verfahren nach einem der Ansprüche 1 bis 16, **dadurch gekennzeichnet, dass** die Amplitude der Kopplungsimpendanz der Messspule (2, 9, 13) oder der Kompensationsspule (3, 10, 14) zur numerischen Korrektur bzw. Verbesserung der Berechnung eingesetzt wird.

10. Verfahren zum Betreiben eines Wirbelstromsensors (1, 8, 12) mit einer Messspule (2, 9, 13) und einer Auswerteschaltung (4) zur Bestimmung von Material- oder Geometrieparametern, insbesondere der Dicke (D) eines Messobjekts (5), bei dem das Messobjekt (5) mit Abstand (d) zu der Messspule (2, 9, 13) angeordnet wird, die Impedanz der Messspule (2, 9, 13) ausgewertet wird, während die Messspule (2, 9, 13) über eine Wechselspannung vorgegebener Frequenz gespeist ist, und bei dem die Auswerteschaltung (4) aufgrund der Impedanz der Messspule (2, 9, 13) die Material- und Geometrieparameter des Messobjekts (5) bestimmt, wobei die Impedanz oder der Induktivitätswert und/oder der Dämpfungswert der Messspule (2, 9, 13) bei einer Frequenz ermittelt wird, wobei entweder kein Messobjekt (5) -vorhanden ist oder der Abstand (d) zwischen Messobjekt (5) und Messspule (2, 9, 13) größer als der doppelte Radius (R) der Messspute (2, 9, 13) ist und wobei anschließend der Induktivitätswert und der Dämpfungswert mit vorhandenem Messobjekt (5) bestimmt wird, wobei der Abstand zwischen Messspule (2, 9, 13) und Messobjekt (5) kleiner als der Radius (R) der Messspule ist, wobei mittels der Auswerteschaltung (4) aus dem Messwert der Messspule (2, 9, 13) Material- und Geometrieparameter des Messobjekts bestimmt werden und wobei die Kompensationsspule (3, 10, 14) räumlich kleiner als die Messspule (2, 9, 13) ist, insbesondere innerhalb der Messspule (2, 9, 13) angeordnet ist.

11. Verfahren nach Anspruch 10, **dadurch gekennzeichnet, dass** bei bekannter, insbesondere gemessener Leitfähigkeit des Messobjekts (5), dessen Dicke (D) bestimmt wird.

## Claims

1. A method for operating an eddy current sensor (1, 8, 12) with a measuring coil (2, 9, 13) and an evaluation circuit (4) for determining material or geometry parameters, in particular the thickness (D) of a measurement object (5), in which the measurement object (5) is arranged at a distance (d) from the measuring coil (2, 9, 13), the impedance of the measuring coil (2, 9, 13) is evaluated while the measuring coil (2, 9, 13) is being supplied by an alternating voltage of a predetermined frequency, and in which the evaluation circuit (4) determines the material and geometry parameters of the measurement object (5) on the basis of the impedance of the measuring coil (2, 9, 13), wherein the impedance of the measuring coil (2, 9, 13) is measured at an alternating voltage of a first frequency, the impedance of the measuring coil (2, 9, 13) is measured at an alternating voltage of a second frequency and wherein the evaluation circuit (4) computes the material and geometry parameters of the measurement object (5) on the basis of the impedances of the measuring coil (2, 9, 13) at the first and the second frequency, wherein temperature influences on the impedance of the measuring coil (2, 9, 13) are compensated for by a compensation coil (3, 10, 14) the impedance of which is nearly independent of the material or geometry parameters of the measurement object (5), and wherein the compensation coil (3, 10, 14) is physically smaller than the measuring coil (2, 9, 13) and, in particular, is arranged inside the measuring coil (2, 9, 13).

2. A method according to claim 1, **characterised in that** when the conductivity of the measurement object (5) is known, in particular has been measured, its thickness (D) is determined, or the conductivity of the measurement object (5) is computed by the evaluation circuit (4) on the basis of the measured impedance of the measuring coil (2, 9, 13) at the first frequency.

3. A method according to claim 2, **characterised in that** the measuring coil (2, 9, 13) is supplied with an alternating voltage of a high first frequency, so that its impedance is nearly independent of the material or geometry parameters of the measurement object (5).

4. A method according to any one of claims 1 to 3, **characterised in that** the material or geometry parameters of the measurement object (5) are computed by the evaluation circuit (4), in particular by a computer, by means of a non-linear equation system, wherein the non-linear equation system may be dependent on the first frequency and the second frequency of the alternating voltage.

5. A method according to any one of claims 1 to 4, **characterised in that** by means of the computed conductivity and the non-linear equation system the material or geometry parameters of the measurement object (5), in particular the thickness (D) of a flat measurement item, are computed.

6. A method according to any one of claims 1 to 5, **characterised in that** the thickness (D) of a measurement object (5) is computed using the following equation:

$$D \approx constant * \tan \varphi_c = -2\beta_k \frac{2\sqrt{2}\beta_k(ch(\delta_k)\text{-}cos(d_k))+3(sh(\delta_k)\text{-}sin(\delta_k))}{3\sqrt{2}(3ch(\delta_k)-2cos(\delta_k))+2\beta_k(sh(\delta_k)+sin(\delta_k))}$$

7. A method according to any one of claims 1 to 6, **characterised in that** the computation of the material or geometry parameters of the measurement object (5) by the evaluation circuit is limited to a range as a function of the conductivity of the measurement object (5) and the frequencies, wherein the range to which the computation of the evaluation circuit (4) is limited may be specified by the following equation:

$$r\sqrt{\omega_k\mu_0\sigma_k} \geq 10$$

8. A method according to any one of claims 1 to 7, **characterised in that** the evaluation circuit (4) compensates, by computation, for the temperature influence on the measuring coil (2, 9, 13) on the basis of the impedance of the measuring coil (2, 9, 13), wherein, under similar ambient conditions, the quality of the measuring coil (2, 9, 13) and that of the compensation coil (3, 10, 14) may be equal.

9. A method according to any one of claims 1 to 8, **characterised in that** the computation of the material and geometry parameters of the measurement object (5) is computed independently of the distance between the measuring coil (2, 9, 13) and the measurement object (5) and/or the temperature compensation is carried out by subtraction of the complex impedance of the measuring coil (2, 9, 13) from the complex impedance of the compensation coil (3, 10, 14) and/or the material or geometry parameters of the measurement object (5) are measured by a transmitting coil and a receiving coil and/or the amplitude of the coupling impedance of the measuring coil (2, 9, 13) or the compensation coil (3, 10, 14) is used for numerical correction or improvement of the computation.

10. A method for operating an eddy current sensor (1, 8, 12) with a measuring coil (2, 9, 13) and an evaluation circuit (4) for determining material or geometry parameters, in particular the thickness (D) of a measurement object (5), in which the measurement object (5) is arranged at a distance (d) from the measuring coil (2, 9, 13), the impedance of the measuring coil (2, 9, 13) is evaluated while the measuring coil (2, 9, 13) is being supplied *via* an alternating voltage of a predetermined frequency, and in which the evaluation circuit (4) determines the material and geometry parameters of the measurement object (5) on the basis of the impedance of the measuring coil (2, 9, 13), wherein the impedance or the inductance value and/or the attenuation value of the measuring coil (2, 9, 13) is determined at a frequency with either no measurement object (5) being present or with the distance (d) between the measurement object (5) and the measuring coil (2, 9, 13) being greater than double the radius (R) of the measuring coil (2, 9, 13) and wherein subsequently the inductance value and the attenuation value are determined with the measurement object (5) present, the distance between the measuring coil (2, 9, 13) and the measurement object (5) being smaller than the radius (R) of the measuring coil, wherein by means of the evaluation circuit (4) material and geometry parameters of the measurement object are determined from the measured value of the measuring coil (2, 9, 13) and wherein the compensation coil (3, 10, 14) is physically smaller than the measuring coil (2, 9, 13) and, in particular, is arranged inside the measuring coil (2, 9, 13).

**11.** A method according to claim 10, **characterised in that** when the conductivity of the measurement object (5) is known, in particular has been measured, its thickness (D) is determined.

**Revendications**

**1.** Procédé pour la conduite d'un capteur à courants de Foucault (1, 8, 12) avec une bobine de mesure (2, 9, 13) et un circuit d'exploitation (4) pour la détermination de paramètres de matière ou de géométrie, en particulier l'épaisseur (D) d'un objet de mesure (5), dans lequel l'objet de mesure (5) est disposé à un écartement (d) de la bobine de mesure (2, 9, 13), l'impédance de la bobine de mesure (2, 9, 13) est évaluée pendant que la bobine de mesure (2, 9, 13) est alimenté par une tension alternative d'une fréquence prédéfinie et dans lequel le circuit d'exploitation (4) détermine les paramètres de matière et de géométrie de l'objet de mesure (5) sur la base de l'impédance de la bobine de mesure (2, 9, 13), l'impédance de la bobine de mesure (2, 9, 13) étant détectée avec une tension alternative d'une première fréquence, l'impédance de la bobine de mesure (2 ,9, 13) étant détectée avec une tension alternative d'une seconde fréquence et le circuit d'exploitation (4) calculant les paramètres de matière et de géométrie de l'objet de mesure (5) sur la base des impédances de la bobine de mesure (2, 9, 13) avec les première et seconde fréquences, des influences de la température sur l'impédance de la bobine de mesure (2, 9, 13) étant compensées par une bobine de compensation (3, 10, 14) dont l'impédance est presque indépendante des paramètres de matière ou de géométrie de l'objet de mesure (5) et la bobine de compensation (3, 10, 14) étant plus petite dans l'espace que la bobine de mesure (2, 9, 13), étant en particulier disposée à l'intérieur de la bobine de mesure (2, 9, 13).

**2.** Procédé selon la revendication 1,
**caractérisé par le fait que**, dans le cas d'une conductibilité connue, en particulier mesurée, de l'objet de mesure (5), son épaisseur (D) est mesurée ou que la conductibilité de l'objet de mesure (5) est calculée par le circuit d'exploitation (4) sur la base de l'impédance mesurée de la bobine de mesure (2 ,9, 13) à la première fréquence.

**3.** Procédé selon la revendication 2,
**caractérisé par le fait que** la bobine de mesure (2, 9, 13) est alimentée par une tension alternative de première fréquence élevée de telle manière que son impédance est presque indépendante des paramètres de matière ou de géométrie de l'objet de mesure (5).

**4.** Procédé selon l'une des revendications 1 à 3,
**caractérisé par le fait que** les paramètres de matière ou de géométrie de l'objet de mesure (5) sont calculés par le circuit d'exploitation (4), en particulier par un calculateur, au moyen d'un système d'équations non linéaires, le système d'équations non linéaires pouvant être dépendant de la première fréquence et de la seconde fréquence de la tension alternative.

**5.** Procédé selon l'une des revendications 1 à 4,
**caractérisé par le fait que** les paramètres de matière ou de géométrie de l'objet de mesure (5), en particulier l'épaisseur (D) d'un matériau plat, sont mesurés au moyen de la conductibilité calculée et du système d'équations non linéaires.

**6.** Procédé selon l'une des revendications 1 à 5,
**caractérisé par le fait que** l'épaisseur (D) d'un objet de mesure (5) est calculée par l'intermédiaire de l'équation suivante :

$$D \approx const. \cdot \tan \varphi_c = -2\beta_k \frac{2\sqrt{2}\beta_k(ch(\delta_k)-\cos(\delta_k))+3(sh(\delta_k)-\sin(\delta_k))}{3\sqrt{2}(3ch(\delta_k)-2\cos(\delta_k))+2\beta_k(sh(\delta_k)+\sin(\delta_k))}$$

**7.** Procédé selon l'une des revendications 1 à 6,
**caractérisé par le fait que** le calcul des paramètres de matière ou de géométrie de l'objet de mesure (5) par le circuit d'exploitation (4) est limité à une plage en dépendance de la conductibilité de l'objet de mesure (5) et des fréquences, la plage sur laquelle le calcul du circuit d'exploitation (4) est limité pouvant être prédéfinie par l'équation suivante :

$$r\sqrt{\omega_k\mu_o\sigma_k} \geq 10$$

**8.** Procédé selon l'une des revendications 1 à 7,
**caractérisé par le fait que** le circuit d'exploitation (4) compense par le calcul l'influence de la température sur la bobine de mesure (2, 9, 13), les qualités de la bobine de mesure (2, 9, 13) et de la bobine de compensation (3, 10, 14) pouvant être égales en valeur dans des conditions d'environnement semblables.

**9.** Procédé selon l'une des revendications 1 à 8,
**caractérisé par le fait que** le calcul des paramètres de matière et de géométrie de l'objet de mesure (5) est effectué indépendamment de la distance entre la bobine de mesure (2, 9, 13) et l'objet de mesure (5) et/ou que la compensation de température a lieu par soustraction de l'impédance complexe de la bobine de mesure (2, 9, 13) de l'impédance complexe de la bobine de compensation (3, 10, 14) et/ou que les paramètres de matière ou de géométrie de l'objet de mesure (5) sont mesurés par une bobine émettrice et une bobine réceptrice et/ou que l'amplitude de l'impédance de couplage de la bobine de mesure (2, 9, 13) ou de la bobine de compensation (3, 10, 14) est utilisée. pour la correction numérique ou respectivement l'amélioration du calcul.

**10.** Procédé pour la conduite d'un capteur à courants de Foucault (1, 8, 12) avec une bobine de mesure (2, 9, 13) et un circuit d'exploitation (4) pour la détermination de paramètres de matière ou de géométrie, en particulier de l'épaisseur (D) d'un objet de mesure (5), dans lequel l'objet de mesure (5) est disposé à un écartement (d) de la bobine de mesure (2, 9, 13), l'impédance de la bobine de mesure (2, 9, 13) est évaluée pendant que la bobine de mesure (2, 9, 13) est alimentée par une tension alternative de fréquence prédéfinie et dans lequel le circuit d'exploitation (4) détermine les paramètres de matière et de géométrie de l'objet de mesure (5) sur la base de l'impédance de la bobine de mesure (2, 9, 13), l'impédance ou la valeur d'inductance et/ou la valeur d'amortissement de la bobine de mesure (2, 9, 13) étant déterminées à une fréquence, soit aucun objet de mesure (5) n'étant présent, soit l'écartement (d) entre l'objet de mesure (5) et la bobine de mesure (2, 9, 13) étant plus grand que le double du rayon (R) de la bobine de mesure (2, 9, 13) et la valeur d'inductance et la valeur d'amortissement étant déterminées immédiatement après avec l'objet de mesure (5) présent, l'écartement entre la bobine de mesure (2, 9, 13) et l'objet de mesure (5) étant inférieur au rayon (R) de la bobine de mesure , les paramètres de matière et de géométrie de l'objet de mesure étant déterminés au moyen du circuit d'exploitation (4) à partir de la valeur mesurée de la bobine de mesure (2, 9, 13) et la bobine de compensation (3, 10, 14) étant plus petite dans l'espace que la bobine de mesure (2, 9, 13), étant en particulier disposée à l'intérieur de la bobine de mesure (2, 9, 13).

**11.** Procédé selon la revendication 10,
**caractérisé par le fait que**, dans le cas d'une conductibilité connue, en particulier mesurée, de l'objet de mesure (5), son épaisseur (D) est déterminée.

Fig. 1

**Fig. 2a**

**Fig. 2b**

**Fig. 3**

**Fig. 4**

Fig. 5

$\tan \rho_c$

Fig. 6

$\tan \rho_c$